(19) Europäisches Patentamt
European Patent Office
Office européen des brevets

(11) **EP 2 204 303 B1**

(12) **FASCICULE DE BREVET EUROPEEN**

(45) Date de publication et mention
de la délivrance du brevet:
**25.01.2012 Bulletin 2012/04**

(51) Int Cl.:
***B60R 19/42*** *(2006.01)* ***B60R 19/04*** *(2006.01)*
***B60R 19/38*** *(2006.01)* ***B60R 19/22*** *(2006.01)*

(21) Numéro de dépôt: **10159685.6**

(22) Date de dépôt: **31.10.2005**

(54) **Kart équipé d'un élément de protection frontal en deux parties coulissantes l'une par rapport à l'autre**

Go-Kart mit einer ein verschiebbares Seitenteil enthaltenden Schutzanordnung, Seitenteil und entsprechende Schutzanordnung

Kart equipped with a protection assembly comprising a sliding side element, a side element and corresponding protection assembly

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **29.10.2004 FR 0411659**

(43) Date de publication de la demande:
**07.07.2010 Bulletin 2010/27**

(62) Numéro(s) de document de la (des) demande(s) initiale(s) en application de l'article 76 CBE:
**05801712.0 / 1 805 063**

(73) Titulaire: **Sodikart**
**44220 Couëron (FR)**

(72) Inventeurs:
• **Merian, Alain**
**44450, LA CHAPELLE BASSE-MER (FR)**
• **Delahaye, Alexis**
**49600, BEAUPREAU (FR)**
• **Gergaud, William**
**44119, TREILLERES (FR)**

(74) Mandataire: **Bioret, Ludovic**
**Cabinet Vidon**
**Technopôle Atalante**
**16 B, rue de Jouanet**
**35703 Rennes Cedex 07 (FR)**

(56) Documents cités:
**EP-A- 0 159 555** **DE-A1- 2 559 529**
**DE-A1- 4 432 082** **US-A- 5 139 297**
**US-A- 5 806 901**

**Description**

Le domaine de l'invention est celui des véhicules pratiqués sur pistes. Plus précisément, l'invention concerne les organes de protection des karts contre les chocs.

L'invention s'applique particulièrement aux karts de location, mais également aux karts de compétition et de loisir.

Les karts sont des véhicules motorisés exploités sur des pistes fermées, par opposition à des véhicules roulant sur route. Ces pistes sont extérieures (« outdoor ») ou couvertes (« indoor »).

On peut distinguer deux catégories principales de karts : les karts de location et les karts de loisir-compétition.

Les premiers sont exploités par des professionnels qui les louent à des particuliers (location au ticket), ou à des entreprises dans le cadre de séminaires de motivation du personnel ou autres.

Les seconds sont la plupart du temps la propriété de personnes privées, qui les utilisent pour leur loisir, en s'entraînant et en participant à des compétitions.

Pour les locations, les vitesses de pointe des karts sont généralement de l'ordre de 60km/h tandis que celles des karts de loisir-compétition sont supérieures à 120 km/h.

Or, que ce soit en location ou en loisir-compétition, les pertes de contrôle et les sorties de route sont fréquentes. Aussi, pour en atténuer les effets, les pistes sont munies de protection (le plus souvent des pneus) ou de dégagements appropriés (par exemple des bacs à sable ou à graviers) sur les pistes outdoor.

On remarque généralement que les conséquences des pertes de contrôle sont aggravées par le fait que les karts roulent en « flotte », c'est-à-dire à plusieurs en même temps (ce qui accroît les risques de télescopage).

Les chocs subis par un kart et son pilote peuvent donc être multiples : chocs contre une protection de piste et chocs entre deux karts, ceci sous tous les angles possibles.

Ces chocs sont particulièrement fréquents sur les pistes « indoor », plus étroites et au tracé très sinueux.

On comprend évidemment que les chocs, qui peuvent être violents, peuvent non seulement causer des dommages à la structure et aux accessoires du kart, mais présentent également un danger pour la sécurité des pilotes.

Il est donc important que les accélérations qu'ils engendrent sur les véhicules et les pilotes soient les plus faibles possibles.

Sur le plan technique, les karts présentent certaines particularités par rapport à d'autres véhicules sportifs. En effet, ils n'ont ni différentiel, ni suspension.

L'absence de suspension a pour conséquence que la capacité des karts à prendre des courbes dépend fortement de la déformation du châssis qui, si elle est adéquate, permet de lever ou de soulager la roue intérieure arrière et donc d'éviter le sous-virage.

En d'autres termes, il est important, pour avoir une conduite agréable, que le châssis soit suffisamment souple.

Parallèlement, lorsqu'on cherche à concevoir des organes de protection des karts et de leurs pilotes contre les chocs, il est fondamental d'intégrer le fait qu'une protection de kart doit assurer des fonctions multiples, et notamment :

- éviter les chevauchements et encastrements ;
- éviter le contact avec les roues d'autres karts ;
- résister à l'abrasion due aux contacts ;
- absorber l'énergie d'impact ;
- ne pas pénaliser la tenue de route ;
- résister à la température (près du pot d'échappement en particulier) ;
- contribuer à l'esthétique.

Concernant les chevauchements et/ou encastrements, les organes de protection doivent permettre d'éviter qu'un kart ne puisse s'encastrer sous un autre (au risque de le retourner), et également qu'un kart ne décolle sur un autre (au risque de heurter un pilote).

Il est aussi souhaitable d'éviter de bloquer le trafic à cause d'un chevauchement, et, en particulier, de ne pas obliger les pilotes à sortir des karts (ce qui s'avère particulièrement dangereux, les pilotes étant alors exposés aux autres karts en circulation) pour se dégager.

Une norme DIN tient compte de ce risque en exigeant une hauteur minimum de protection.

Concernant le contact avec les roues d'autres karts, il s'agit d'éviter un tel contact pour éviter de provoquer un « effet d'engrenage » qui pourrait être violent au point de faire décoller le véhicule.

La protection de l'arbre arrière et des biellettes de direction doit également être assurée. Ce point est prévu dans des normes DIN et AFNOR.

Concernant les phénomènes d'abrasion due aux contacts avec les autres karts, on constate en effet que les organes de la protection sont soumis à des phénomènes de friction, en particulier lors de contacts à faible incidence. Cette contrainte a une répercussion sur le choix des matériaux et leur épaisseur, avec pour objectif d'éviter un remplacement trop fréquent des pièces entraîné par une usure prématurée.

Concernant l'énergie à absorber lors d'un impact, les organes de protection doivent permettre de limiter les accélérations sur le pilote, le cadre et les accessoires.

A l'inverse des automobiles de tourisme pour lesquelles on admet que l'énergie de déformation entraîne la destruction de la structure, le kart demande que la déformation soit réversible sur la plage la plus élevée possible.

Cette condition s'impose, en particulier en location, afin de permettre la poursuite de l'exploitation et d'éviter des changements de pièces fréquents et donc coûteux.

Or, la raideur élevée du cadre dans son plan fait qu'il ne peut absorber de l'énergie sans engendrer des forces importantes et donc des accélérations très fortes.

Pour cette raison, la protection doit être l'élément principal de la reprise d'énergie.

Concernant l'introduction des efforts sur le cadre, on sait que les forces d'impact sont transmises au cadre par l'intermédiaire de la protection. En conséquence, la protection doit assurer une introduction homogène des efforts, ceci en évitant les concentrations de contraintes et les flexions qui pourraient provoquer une sollicitation des tubes du cadre au-delà de leur limite élastique, ce qui entraînerait une déformation irréversible du châssis (le rendant inutilisable).

A ce titre, on note que l'analyse de cadres tordus par des chocs montre que des efforts supérieurs à 2 tonnes existent, soit des accélérations supérieures à 15 g.

Concernant la tenue de route, les organes de protection devraient être suffisamment élastiques pour ne pas gêner la déformation du châssis qui est nécessaire pour la tenue de route.

La tenue en température est un paramètre important lors de la conception des organes de protection, au moins localement. C'est le cas en particulier au voisinage de l'échappement, et, dans une moindre mesure, au voisinage du moteur.

Enfin, il est souhaitable que la protection du kart soit esthétique.

Il faut donc chercher un compromis consistant à faire en sorte que les fonctions listées précédemment soient remplies sans donner au kart un aspect trop lourd.

Les chocs et le comportement des organes de protection en fonction de ces chocs vont maintenant être analysés sur un plan théorique.

Préalablement, on rappelle que, bien entendu, les chocs qui causent les dommages les plus importants se produisent quand un kart percute un autre kart à grande vitesse. Le lieu de l'impact sur le kart récepteur est très variable : arrière, côtés, roues avant. Il en est de même de l'angle d'incidence.

Dans des chocs à forte énergie, l'impact est donné par l'avant du kart incident.

L'absorption d'énergie dépend de la raideur du système et de la déformation possible.

$$Ec \quad = 1/2 \ MV^2$$

$$Eabs \quad = 1/2 \ K^*X^2$$

$$Fmax \quad = K^*Xmax$$

$$ACCmax = Fmax/M$$

Où:

Ec = énergie cinétique
Eabs = énergie absorbée
K = raideur de la protection avant
X = enfoncement de la protection avant
Fmax = force maximum de contact pendant le choc
ACCmax = accélération maximum du kart incident ou récepteur
M = masse du kart (environ 220 kg avec pilote)

Si l'on veut limiter l'accélération à une valeur donnée, par exemple 10 g, le niveau de l'énergie cinétique que l'on peut absorber est fonction de l'enfoncement possible.

Le tableau ci-dessous donne l'enfoncement que doit avoir la protection pour des valeurs d'accélérations max de 10 et 15 g et une vitesse d'impact de 10 km/h et 20 km/h (sur un mur rigide).

Enfoncement /forces max et raideurs nécessaires en cm

|  | 10 km/h | 20 km/h |
|---|---|---|
| 10 g maximum | Enfoncement = 7.8 cm<br>Force = 21582 N<br>Raideur = 2.77 exp5N/m | Enfoncement = 31.2 cm<br>Force = 21582 N<br>Raideur = .69 exp5N/m |
| 15 g maximum | Enfoncement = 5.2 cm<br>Force = 32373N<br>Raideur = 6.22 exp5N/m | Enfoncement = 15.6 cm<br>Force = 32373N<br>Raideur = 2.07 exp5N/m |

Des mesures effectuées sur les protections existantes montrent que leur raideur à l'avant des karts est élevée : 3cm de déformation pour une force de 2 tonnes soit une raideur de 6.6exp5 N/M.

Cette raideur conduit bien sûr à des dommages sur la structure du kart et sur certains de ses organes.

En outre, une telle raideur entraîne des accélérations non acceptables pour les pilotes (10 g pour un choc à 6 km/h).

Les inventeurs ont déterminé qu'une protection à la fois efficace et réversible devrait tolérer un enfoncement minimum de 7 à 15 cm (suivant les modèles). Un enfoncement supérieur, même s'il est possible, conduirait à allonger le véhicule de façon inacceptable.

En pratique, aucune protection de kart actuelle ne permet de satisfaire l'ensemble des critères mentionnés précédemment. Bien entendu, plusieurs techniques de protection existent, comme mentionné dans le bref historique ci-après.

Lors de l'apparition des premiers karts, aucune protection n'était prévue. Depuis, différents types de protection ont été proposées, à savoir :

- les protections par carrosserie ;
- les protections par carrosserie combinée à un entourage plastique ;
- les protections absorbeuses d'énergie ;

La protection par carrosserie se rencontre sur les karts de compétition et sur certains karts de location.

Une telle protection est composée des éléments suivants :

- spoiler avant ;
- pontons latéraux droit et gauche ;
- pare-choc arrière métallique.

Sur les karts de location, les pontons latéraux peuvent être renforcés par des plaques, ajourées ou non, pour mieux résister à la friction.

Ce type de protection n'influe pas sur le vrille (phénomène de torsion subi par un châssis de kart dans un virage).

De plus, la capacité d'une carrosserie à absorber de l'énergie de façon réversible s'avère faible.

Le spoiler constitue quant à lui un bon absorbeur dans le cas des chocs avants, à partir du moment où il se déforme de façon irréversible. Il en va de même, dans une moindre mesure, pour les pontons.

L'expérience a montré que les cadres sont assez bien protégés par ce type de protection : les cas de déformation au-delà de la limite élastique sont rares.

En revanche, cette même expérience a montré que les chocs capables de déformer les spoilers de façon irréversible étaient trop fréquents, engendrant des coûts d'exploitation inacceptables pour les pistes.

Pour cette raison principale, des entourages supplémentaires ont été mis au point.

Concernant les protections à l'aide d'entourage plastique, le plus connu parmi ceux-ci est l'entourage plastique appelé « proline » proposé par la Demanderesse. Il se compose :

- d'une partie « proline » avant ;
- de deux « proline » latéraux qui protègent les roues avant et arrière ;
- d'un « proline » arrière qui tient lieu de par-choc.

Les différentes parties du « proline » sont fixées au cadre par des silent blocs dont la raideurest élevée et dont la capacité d'absorption d'énergie est faible.

Cette fixation assez rigide est nécessaire pour que la stabilité du « proline » dans l'espace soit acquise. Sans cela, le « proline » pourrait avoir un mouvement vertical pendant un choc et provoquer un encastrement ou un chevauchement des karts.

L'expérience a montré que, si le « proline » a fortement réduit les bris de spoiler, les efforts qu'il transmet au cadre sont plus élevés qu'avec la protection par carrosseries seules: de nombreuses ruptures ou déformations plastiques des tubes ont été constatées, obligeant à mettre des renforts locaux à l'introduction des forces.

Le « proline » rigidifle le châssis dans la partie arrière. Cet accroissement de raideur est maintenu dans des limites acceptables par la faible inertie de la protection au droit des roues avant qui, par conséquent, sont moins protégées. Pour cette raison, les chocs perpendiculaires au cadre, au droit des roues avant engendrent des contraintes élevées sur les fusées et les chapes. Le châssis doit alors être localement renforcé pour les absorber.

Dans leur principe, les entourages métalliques sont identiques aux entourages plastiques. Comme eux, et pour les mêmes raisons, ils sont fixés de façon assez rigide au cadre.

Leur capacité d'absorption d'énergie réversible est limitée. Ils peuvent se tordre en cas de choc violent. Le redressage est malaisé et peu esthétique. Peu élégant, seul son coût faible et son antériorité font qu'il est encore assez répandu (principalement hors de France).

Toutefois, ce type d'entourage rigidifie le châssis. Seules des liaisons très élastiques au cadre permettent de limiter cet effet, entraînant une sensibilité à l'encastrement accrue.

Les documents de brevet publiés sous les numéros US - 3 666 310 et US - 5 139 297 décrivent des solutions de protection absorbeuse d'énergie, mettant en oeuvre un matériau mousse, intercalé entre deux profilées métalliques définissant une cavité dans laquelle est placée la mousse, les deux profilés étant mobiles l'un par rapport à l'autre pour permettre le travail de la mousse. Les documents DE 25 59529 et DE 44 32082 décrivent des solutions similaires.

Une autre solution a été décrite dans le document de brevet US - 5 806 901, selon laquelle l'énergie d'impact est absorbée par des plots élastiques (caoutchouc), de section triangulaire, assemblés par gougeons et écrous. De plus, la partie avant est constituée d'une lame articulée sur un butoir. Ce dernier est muni de plots élastiques venant s'appuyer sur le cadre. Les fixations de pare-choc arrière sont munies de fentes pour permettre un déplacement transversal au kart et favoriser le travail des plots élastiques.

Ce système, qui autorise un grand enfoncement de la partie avant, est capable, avec un dimensionnement adéquat, d'absorber de façon réversible une énergie élevée en choc frontal.

Il est cependant très lourd et non compatible avec un moteur placé latéralement, comme c'est le cas en général.

En outre, la tenue en température des plots élastiques arrière, au voisinage de l'échappement, n'est pas démontrée.

Encore une autre solution a été décrite par le document WO - 03/057538 (dont le principe est similaire à celui du document US - 5 139 297), selon laquelle la mousse est logée entre une pièce « extérieure » coulissant sur une pièce intérieure, filée au châssis.

Cette technique présente plusieurs inconvénients.

L'enfoncement maximum possible est limité, ce qui, par conséquent, limite également l'énergie absorbable pour une accélération maximum donnée. Ceci est dû au fait que la fixation de la partie avant est faite par des gougeons pouvant se déplacer à l'intérieur de fentes. Celles-ci ne peuvent être allongées (par ex à 15 cm) sans augmenter de façon importante la longueur du véhicule. La longueur des fentes est typiquement de 4 cm. Compte tenu du niveau des énergies à absorber, ceci signifie que la structure du châssis sera très fortement sollicitée.

De plus, la limite d'enfoncement est due aussi au fait que les protections de roues ne disposent pas d'un degré de liberté axial poursuivre le déplacement de la partie avant Si celui-ci est élevé, les protections de roues se déforment par flambage.

Un autre inconvénient réside dans le fait que cette solution ne laisse que deux alternatives en ce qui concerne la tenue de la mousse.

Une alternative consiste à avoir une mousse très rigide pour éviter que les gougeons ne viennent en butée dans leurs logements et dégradent le châssis ou la protection avant. Dans ce cas, les forces d'impact sont très élevées, et la protection ne répond pas à sa fonction première qui est de protéger le pilote. La seconde alternative consiste à avoir une mousse plus souple. Dans ce cas, l'énergie absorbée par la mousse est faible et les efforts sur les gougeons plus fréquents et plus importants, ce qui n'est pas souhaitable.

Un troisième inconvénient est la rigidité du châssis et donc la tenue de route du kart. En effet, les protections des roues sont liées rigidement à la protection avant et aux protections latérales. Le vrillage du châssis estparconséquent entravé, ce qui nuit à la tenue de route du kart. Le document EP 015 9555 qui sert de base pour la présentation en deux parties de la revendication 1, décrit une protection rigide monobloc entourant complétement le châssis d'un vehicule. Cette protection peut coulisser autour du châssis, des moyens elastiques permettant d'amortir son coulissement.

L'invention a notamment pour objectif de pallier ces nombreux inconvénients de l'art antérieur.

Plus précisément, l'invention a pour objectif de proposer une technique de protection des karts co ntre les chocs qui assure une protection du kart et de son pilote plus efficace que les techniques de l'art antérieur.

En ce sens, un objectif particulier de l'invention est de fournir une telle technique qui offre un bon compromis entre raideur et déformation de la protection.

L'invention a également pour objectif de fournir une telle technique qui permette un enfoncement réversible de la protection dans la plupart des chocs susceptibles d'être encaissés par le kart, sans destruction ou détérioration du châssis ou d'autres éléments.

L'invention a aussi pour objectif de fournir une telle technique qui permette de réaliser la protection avec une rigidité n'ayant pas ou peu d'influence sur le vrille du châssis.

Un autre objectif de l'invention est de fournir une telle technique qui permette une déformation minimale de la partie avant sous un choc vertical.

Encore d'autres objectifs de l'invention sont de fournir une telle technique qui confère à la protection les fonctions de :

- prévention contre les risques de chevauchements et/ou d'encastrements ;
- prévention vis-à-vis du contact des roues avec les autres karts ;
- contribution à l'esthétique du kart.

Ces objectifs, ainsi que d'autres qui apparaîtront par la suite, sont atteints grâce à l'invention qui a pour objet un kart selon la revendication 1.

Ceci contribue à augmenter la capacité de la protection à se déformer, ceci de façon réversible.

Selon la caractéristique de la revendication 5 le kart peut comprendre au moins un premier desdits éléments de protection latéral étant monté coulissant par rapport à au moins un autre desdits éléments de protection et/ou audit châssis, selon un axe sensiblement parallèle à l'axe dudit kart.

De cette façon, la protection peut encaisser des chocs importants tout en assurant la protection du pilote et du kart. En effet, la liaison coulissante permet de tolérer un enfoncement important et assure donc une absorption importante de l'énergie d'impact comme cela va apparaître plus clairement par la suite.

En outre, la technique selon l'invention permet de réaliser une protection présentant un compromis entre raideur et déformation de nature à :

- limiter les accélérations subies par les pilotes ;
- permettre la réversibilité des déformations ;
- préserver la capacité du châssis à vriller.

Sur ce dernier point, on comprend que la protection est composée de plusieurs parties constitutives autour du châssis du kart, mobiles entre elles indépendamment du châssis. Une telle protection ne forme donc pas un ensemble monobloc dont la raideur entraverait la capacité du châssis à vriller.

De plus, comme cela va être expliqué plus en détail par la suite, une telle protection est compatible avec un contrôle de la stabilité verticale de la partie avant.

Selon un mode de réalisation préférentiel de l'invention, ledit premier élément de protection latérale est un élément de protection de roue avant.

Cet élément peut ainsi à la fois protéger la roue avant et participer à la stabilisé de l'élément de protection frontal.

Avantageusement, un desdits éléments de protection latéral est solidarisé audit élément de protection frontal et/ou audit élément de protection arrière par une liaison coulissante.

Ledit élément frontal comprend au moins une partie fixe, fixée audit châssis, et au moins une partie mobile par rapport à ladite partie fixe, ladite partie mobile étant dans ce cas préférentiellement montée coulissante par rapport à ladite partie fixe.

Dans ce cas, le kart comprend avantageusement des moyens d'absorption de l'énergie, assurant une liaison entre lesdites parties fixe et mobile, lesdits moyens d'absorption de l'énergie comprenant préférentiellement au moins un bloc de mousse à faible résilience.

On augmente de cette façon la capacité de la protection à absorber, lors d'un choc frontal, l'énergie d'impact. On note que le travail de la mousse est favorisé par la structure de l'élément frontal comprenant une partie fixe et une partie mobile.

Selon une solution avantageuse, ladite partie mobile comprend des moyens de mise en pré-contrainte desdits moyens d'absorption, lesdits moyens de mise en pré-contrainte comprenant préférentiellement au moins une butée anti-retour de ladite partie mobile, de forme oblique permettant également une reprise d'efforts latéraux.

De cette façon, on contribue à Introduire de façon homogène, ces efforts d'impact sur le châssis. A tout le moins, on évite les concentrations de contraintes sur le châssis qui pourraient être de nature à déformer celui-ci de façon irréversible.

Avantageusement, le kart comprend des moyens d'auto-centrage, ou de centrage, de ladite partie mobile, en cas d'enfoncement de cette dernière.

On évite ainsi les risques d'excentration de l'élément frontal qui pourraient entraîner une torsion du châssis lors d'un choc violent.

Préférentiellement, le kart comprend au moins une butée de limitation de la course de ladite partie mobile.

On limite ainsi la compression que peut subir au maximum l'élément frontal.

Selon une solution préférée, ladite partie fixe présente au moins un embrèvement venant coiffer chacun une patte solidaire dudit châssis, de façon à reprendre des efforts latéraux.

Cette caractéristique contribue également à la répartition des efforts sur le châssis.

Préférentiellement, ladite partie fixe présente au moins un prolongement formant butée coopérant chacun avec une patte solidarisée audit châssis.

Une telle butée contribue à limiter la compression de l'élément frontal. De plus, elle empêche l'élément frontal de rentrer dans les jambes du pilote.

Avantageusement, ladite partie fixe présente au moins un prolongement formant butée coopérant chacun avec une patte solidarisée audit châssis.

Selon un deuxième aspect avantageux de l'invention, lesdits éléments de protection latéraux comprennent un élément de protection de roue avant et un élément de protection de roue arrière de chaque côté dudit kart.

Les quatre roues du kart sont ainsi protégées vis-à-vis des autres karts.

Dans ce cas, ledit élément de protection avant est préférentiellement solidarisé audit élément de protection frontal uniquement par ladite partie mobile.

Selon un mode de réalisation particulier, la liaison entre ledit élément de protection de roue avant ladite partie mobile est assurée par au moins une vis.

Selon une solution préférée de ce deuxième aspect de l'invention, lesdits éléments de protection latéraux sont solidarisés audit châssis parune liaison coulissante, ledit châssis et/ou lesdits éléments de protection latérale comprenant une fenêtre de coulissement dans laquelle peut se déplacer une portion de guidage et/ou d'accrochage.

Dans ce cas, ladite fenêtre de coulissement définit préférentiellement des appuis renforçant la stabilité verticale de la partie avant de la protection.

Ceci contribue à limiter, en cas de choc, les risques d'encastrement ou de chevauchement.

En effet, les coulisses ainsi obtenues servent d'appui pour stabiliser la partie mobile de la protection et l'empêchent de s'incliner par rapport à un plan horizontal, ce qui contribue à éviter que le kart ne s'encastre sous un autre, ou le chevauche.

Selon une solution avantageuse, ladite fenêtre de coulissement et/ou ladite portion de guidage et/ou d'accrochage sont configurées de façon à permettre une rotation de l'avant dudit kart par rapport à l'arrière.

De cette façon, le kart peut admettre un « vrillage » de l'avant en arrière, ce qui contribue à assurer une bonne tenue de route du kart.

Selon une variante envisageable, ledit châssis porte au moins une lame de guidage dudit élément de protection latéral, présentant une forte raideur verticale.

Selon un troisième aspect avantageux de l'invention lesdits moyens d'absorption de chocs comprennent préférentiellement des plots élastiques.

Ainsi, grâce aux plots élastiques, la protection est « flottante » autour du châssis ce qui évite de modifier la raideur du châssis et par conséquent, préserve les qualités de tenue de route du kart.

Selon un mode de réalisation préféré de ce troisième aspect de l'invention, lesdits moyens de fixation comprennent une vis de fixation et un élément rigide de maintien des moyens d'absorption de chocs, présentant une ouverture perpendiculaire à l'axe de ladite vis, permettant à l'élément de protection correspondant de se déplacer par rapport audit châssis

Selon un quatrième aspect avantageux de l'invention, au moins un desdits élément de protection latérale est solidarisé à au moins un desdits éléments de protection arrière par au moins un ergot sur un premier desdits éléments pénétrant dans un logement dans un second desdits éléments, et permettant un jeu entre lesdits éléments de protection, en cas de choc.

Dans ce cas, l'un au moins desdits éléments de protection comprend des moyens permettant le passage de l'air vers un moteur.

D'autres caractéristiques et avantages de l'invention apparaîtront plus clairement à la lecture de la description suivante d'un mode de réalisation préférentiel de l'invention, d'une de ses variantes, donnés à titre d'exemples illustratifs et non limitatifs, et des dessins annexés parmi lesquels :

- la figure 1 est une vue de dessus d'un kart équipé d'un ensemble de protection ;
- la figure 2 est une autre vue d'un kart équipé d'un ensemble de protection, l'ensemble de protection étant représenté selon une vue éclatée ;
- la figure 3 est une vue d'un élément de protection frontal d'un ensemble de protection ;
- la figure 4 est une vue illustrant la liaison entre un élément de protection frontal et un élément de protection de roue ;
- les figures 5 et 6 sont des vues illustrant la liaison entre un élément de protection de roue avant et un élément de protection latéral d'un ensemble selon l'invention;
- les figures 7 et 8 sont des vues permettant d'illustrer la liaison entre les éléments de protection de roue avant et l'élément de protection frontal, dans deux positions de coulissement distinctes ;
- les figures 9 et 10 sont des vues illustrant la liaison entre un élément de protection de roue arrière et un élément de protection latérale ;
- la figure 11 est une vue illustrant la liaison entre un élément de protection de roue arrière et un élément de protection arrière ;
- les figures 12 à 17 sont des vues illustrant la liaison des éléments de protection au châssis ;
- les figures 18 et 19 sont des vues en coupe d'un élément de protection frontale en position respectivement par défaut et lors d'un choc ;
- les figures 20 à 23 sont d'autres vues d'un élément de protection frontal d'un ensemble de protection ;
- la figure 24 est une vue d'une variante de réalisation d'un élément de protection frontal ;
- la figure 25 est une vue éclatée en perspective d'un châssis de kart et de ses protections, selon un mode de réalisation de l'invention;
- la figure 26 est une vue de dessus éclatée du châssis de kart et des protections de la figure 25 ;
- la figure 27 est une vue de dessus du châssis de la figure 25 équipé de ses protections.

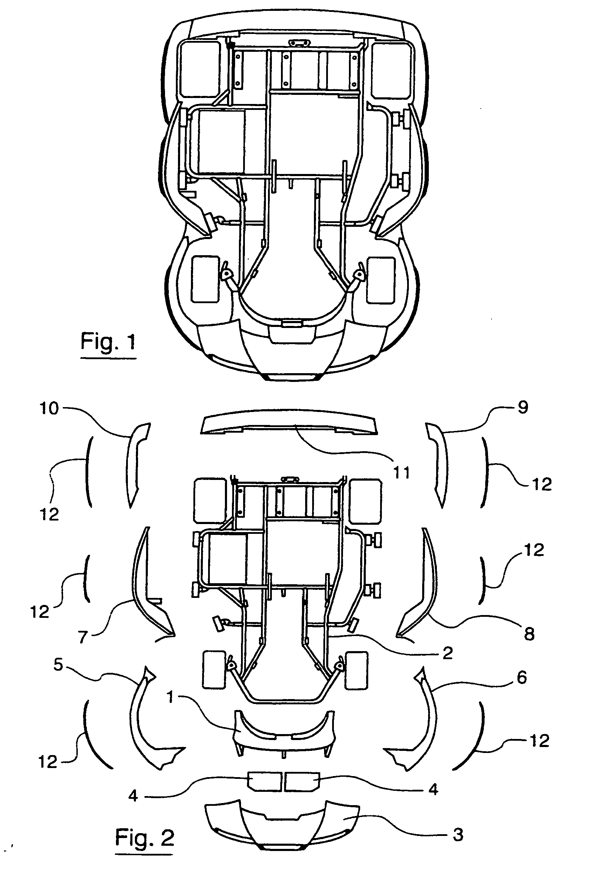

Un kart équipé d'un ensemble de protection est illustré par la figure 1. Ce kart ne met pas en oeuvre l'invention telle que revendiquée dans la présente demande, mais sa description est utile pour une bonne compréhension de l'invention.

On note qu'un tel ensemble procure au kart une allure particulièrement dynamique et sportive d'un point de vue esthétique, par opposition aux protections traditionnelles se présentant sous la forme d'un entourage essentiellement rectangulaire procurant une image d'auto-tamponneuse.

En référence à la figure 2, un ensemble de protection de kart selon le présent mode de réalisation comprend :

- un élément de protection avant comprenant :

  - un butoir 1, lié au châssis 2;
  - un spoiler 3 venant coulisser sur le butoir 1 ;
  - deux pains de matériau amortissant 4, intercalés entre le butoir 1 et le spoiler 3 ;

- deux éléments de protection de roues avant, droite 5 et gauche 6 ;
- un élément de protection latérale droite 7, côté moteur;
- une protection latérale gauche 8 ;
- deux éléments de protection de roues arrière, gauche 9 et droite 10 ;
- un élément de protection arrière 11 ;
- des bandes de friction 12 rapportées sur les divers éléments (à l'exception du spoiler 3).

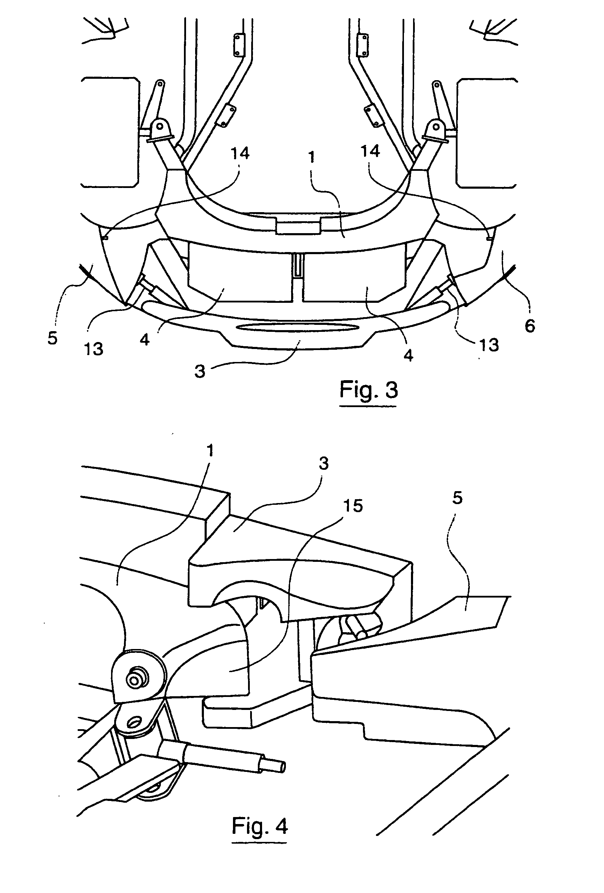

Tel que cela apparaît sur la figure 3, la protection de roue avant 5 s'emboîte dans le spoiler 3 et est liée par des vis 13 et 14 à celui-ci.

De plus, la protection de roue avant 5 s'appuie sur une face oblique 15 à l'arrière du butoir 1. Un tel montage est réalisé de façon identique du côté de la protection de roue avant 6.

Ceci permet, au montage, de comprimer le matériau amortissant 4 (précontrainte pour limiter la résilience) et d'empêcher le spoiler 3 d'échapper vers l'avant.

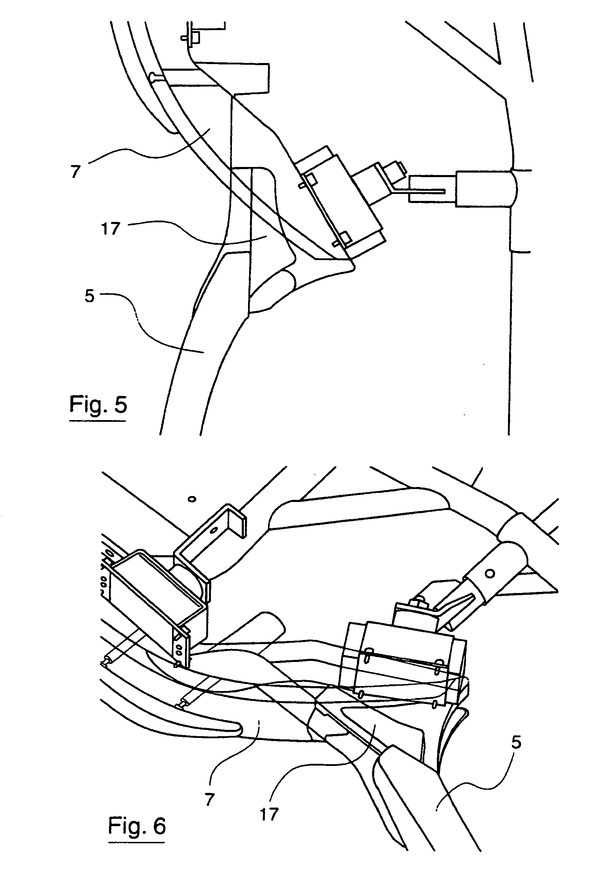

En outre, la protection de roue avant est liée à l'élément de protection latérale par une coulisse 17 (figures 5 et 6).

Une telle liaison coulissante est également prévue du côté de l'élément de protection latérale 8.

Ces coulisses autorisent un déplacement relatif des protections de roues avant par rapport aux protections latérales, dans un plan horizontal et suivant une direction parallèle à l'axe du kart.

Aux jeux de fonctionnement près, elles lient les pièces dans les autres directions.

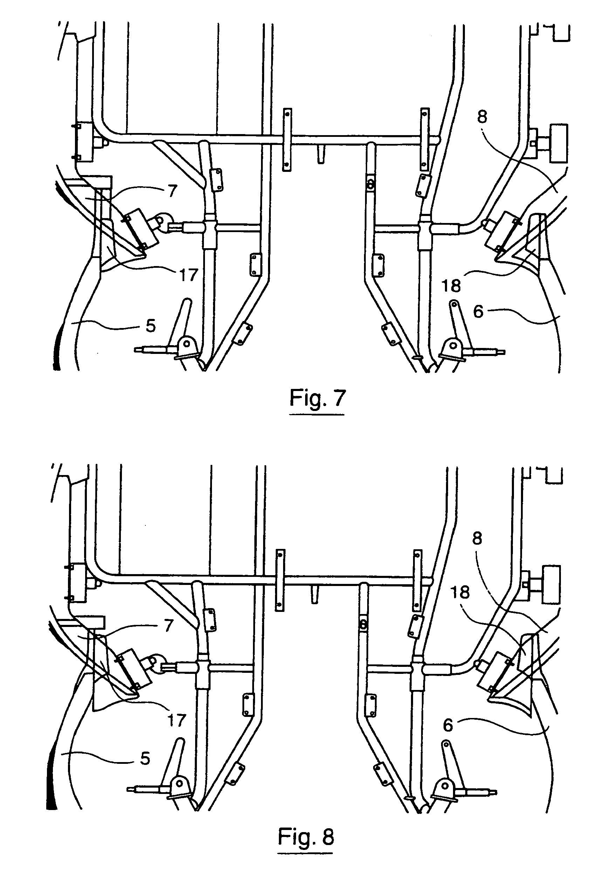

Ainsi, les éléments de protection 5, 6 des roues avant peuvent passer d'une position par défaut telle que celle illustrée par la figure 7, à une position en cas de choc telle que celle illustrée par la figure 8.

On remarque sur cette figure 8 qu'en cas de choc, les coulisses 17 et 18 s'engagent dans un logement prévu à cet effet sur les éléments de protection latérale 7, 8.

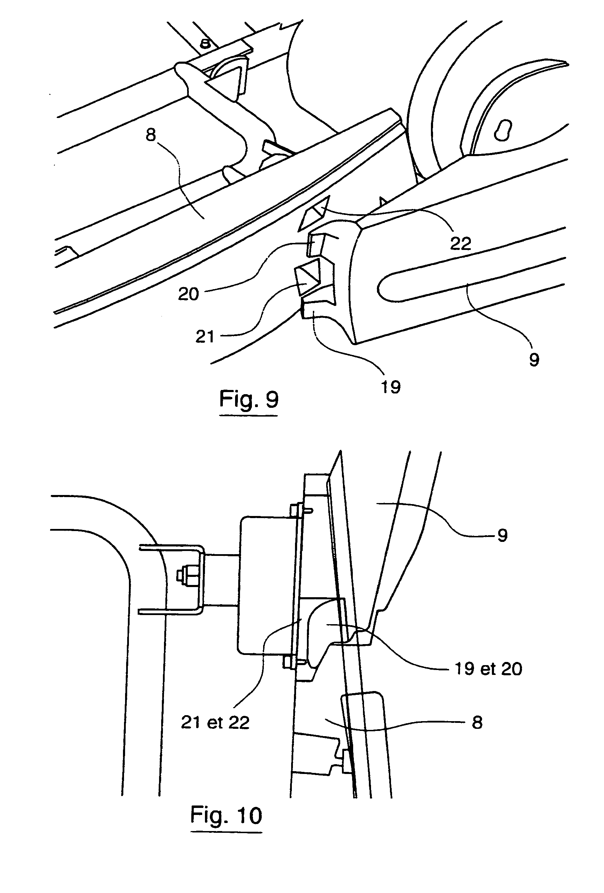

On note que, selon le présent mode de réalisation, les éléments de protection latérale sont couplés à des éléments de protection arrière. Ceci est illustré par les figures 9 et 10 qui montrent que la protection de roue arrière 9 est munie d'ergots 19 et 20 qui s'emboîtent dans des logements de la protection latérale 21. Cette protection de roue arrière 9 est de plus fixée au pare-choc arrière 11 au moyen de deux vis 23 et 24.

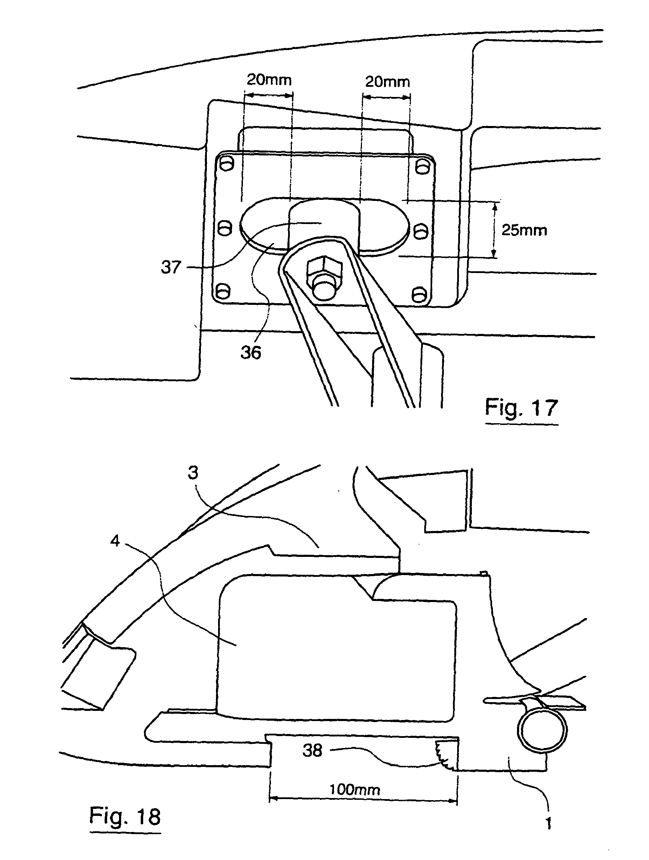

Comme le montre la figure 18, le spoiler coulisse sur le butoir et n'est donc pas directement lié au châssis.

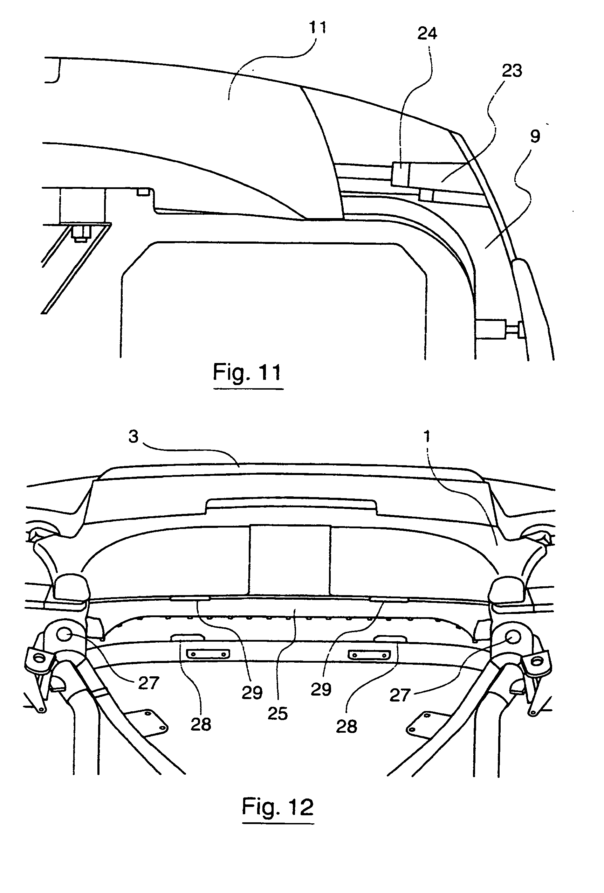

Ce butoir 1 est muni d'une gorge 25 qui vient en appui sur la traverse avant 26 du châssis figure 12. Il est fixé au cadre par deux butées 27 vissées. Deux pattes 28, solidaires de la traverse avant 26 du cadre viennent se loger dans les embrèvements 29.

Les protections de roues avant ne sont pas non plus directement liées au châssis, et sont reliées à celui-ci par l'intermédiaire des éléments de protection latérale.

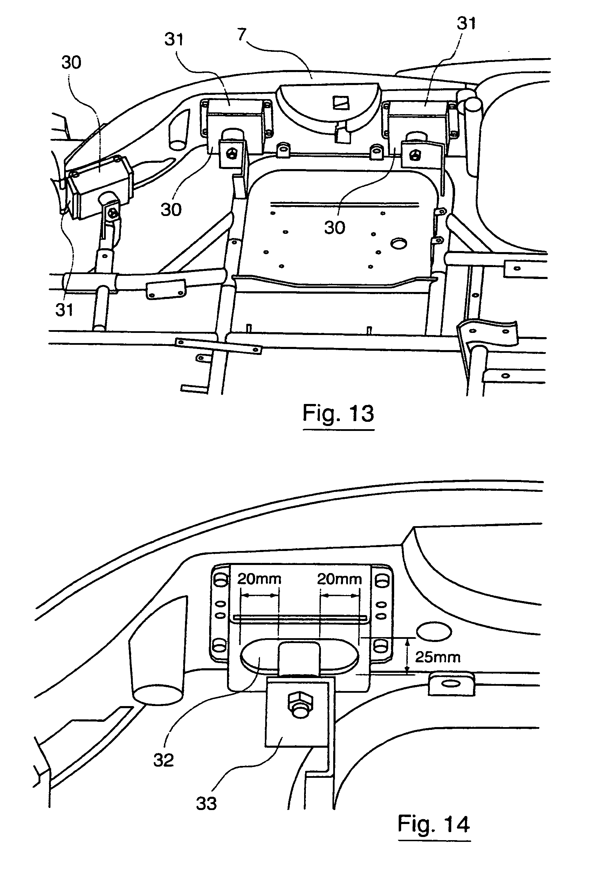

En effet, les éléments de protection latérale droite 7 et gauche sont liés aux châssis par des patins 30 munis de plots élastiques 31. Le passage 32 des tiges 33 (figure 14) permet un déplacement de 20 mm (d'autres dimensions sont bien entendu envisageables) dans le sens longitudinal avant et arrière du kart, et interdit un déplacement dans le sens vertical.

Les éléments de protection de roues arrière sont reliés au châssis par l'intermédiaire de l'élément de protection arrière (les éléments de protection des roues arrière ne sont donc pas directement liés au cadre).

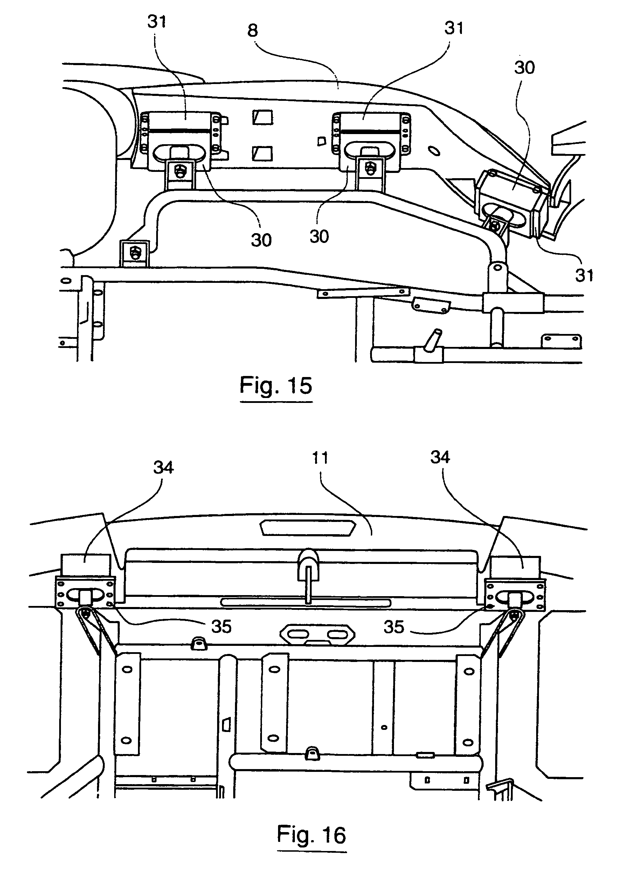

Cet élément de protection arrière est lié au cadre par des patins 35 munis de plots élastiques 34 (figure 16). Le passage 36 des tiges 37 permet un déplacement latéral de +/- 20 mm (d'autres dimensions sont bien entendu envisageables) et interdit un déplacement vertical (figure 17).

Ainsi, grâce aux plots élastiques, la protection est « flottante » autour du cadre. Le jeu de la coulisse entre l'élément de protection de roue avant et l'élément de protection latérale autorise une rotation libre de la partie avant du châssis par rapport à la partie arrière (le vrille en jargon du kart).

L'ensemble fait que la protection ne modifie pas la raideur du châssis et donc préserve les qualités de tenue de route.

Le travail de l'élément de protection frontale dans un ensemble va maintenant être explicité.

En cas de choc frontal dans l'axe du kart, le spoiler 3 coulisse sur le butoir 1 (figures 18 à 20). Le matériau amortissant 4 est comprimé. En bout de course, le spoiler vient appuyer sur la butée « 38 » placée à la base du butoir ; cette butée empêche le spoiler de rentrer dans les jambes du pilote et limite la compression sur les protections de roues avant (pas de flambement).

Puis, les éléments de protection de roues 5 et 6 reculent dans les coulisses 17 et 18 sur une course de 6 cm (figures 7 et 8). Le reste de la course du spoiler (4 cm) est repris par la déformation des éléments de protection des roues et les déplacements longitudinaux autorisés par les tiges de plot.

Lorsque le choc est d'une violence telle que le spoiler est en butée sur le butoir, les forces sont introduites de façon homogène, par le butoir 1, sur la traverse avant du cadre 26, sans excentration susceptible de tordre celui-ci en flexion.

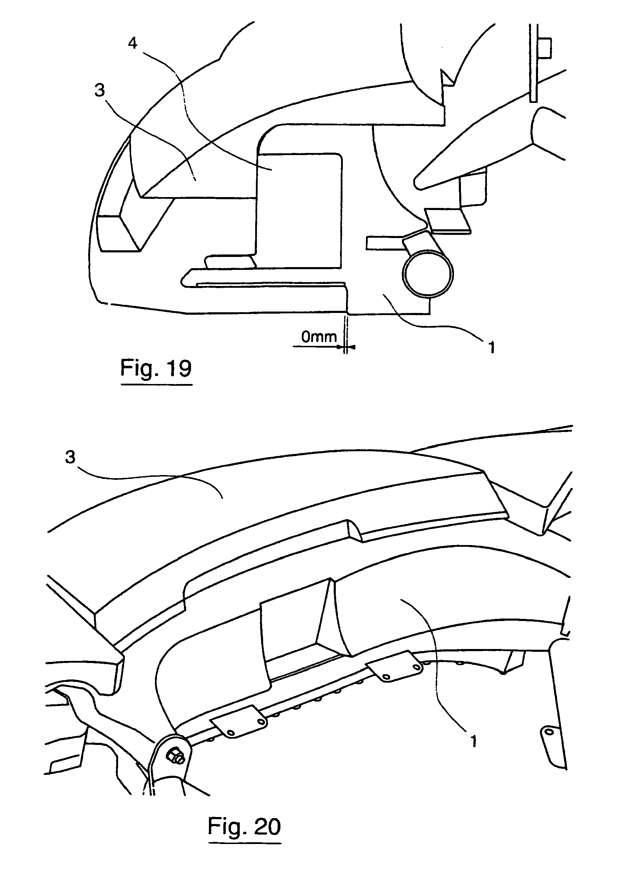

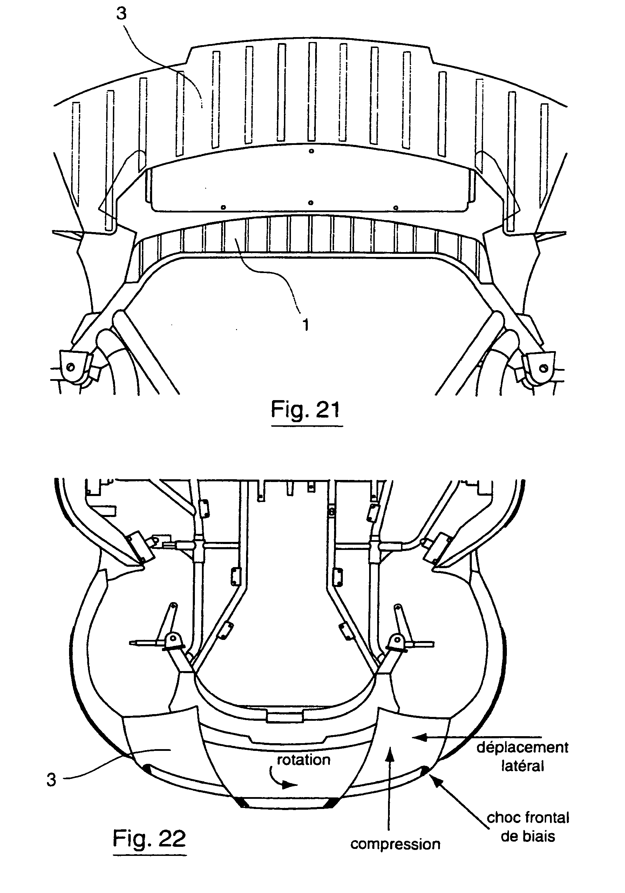

On note que la stabilité dans un plan vertical est assurée d'une part par le recouvrement de la coulisse du spoiler sur le butoir, et d'autre part par les protections de roues avant qui sont tenues au niveau des coulisses avec les protections latérales (figures 20 et 21).

En cas de choc frontal de biais, le point d'impact est décalé par rapport à l'axe du kart et la force est inclinée par rapport à ce même axe.

Sous l'effet de cette force, le spoiler tend à se déplacer selon trois mouvements : une compression (similaire au cas précédent), un déplacement latéral, et une rotation autour d'un axe vertical (figure 22).

Le moment de rotation est repris par l'appui du coin de l'élément de protection sur la face arrière oblique du butoir et la compression du matériau amortissant du côté opposé.

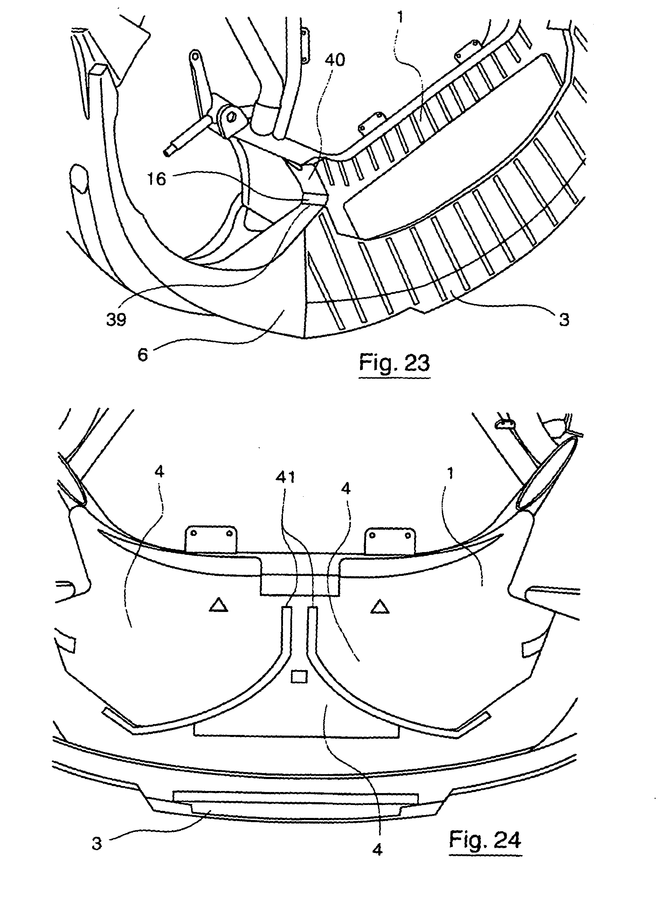

L'effort latéral est repris par l'appui de l'élément de protection de roue sur la face arrière oblique du butoir 16 (figure 23). Le fait que cette face soit oblique engendre un enfoncement du spoiler sur le butoir faisant ainsi travailler le matériau amortissant.

Dans ce mouvement, le spoiler est centré automatiquement sur la butoir par des guides matérialisés par des facettes verticales du butoir 40.

Une variante de réalisation (illustrée par la figure 24) peut être mise en oeuvre pour certaines utilisations (ou pays) qui tolèrent que les roues avant ne soient pas protégées : les protections de roues avant peuvent être remplacées par des pièces venant fermer le spoiler 3 derrière le butoir 1.

La stabilité verticale n'est plus assurée par une coulisse comme décrit précédemment. Le dispositif permettant de retrouver cette stabilité verticale peut comprendre alors une lame courbe 41 fixée au fond du butoir et coulissant sur la partie intérieure du spoiler.

Des mousses sont disposées de part et d'autre de la lame.

La lame est typiquement en polyéthylène de 13 mm d'épaisseur, mais peut être également en stratifié ou en métal (éventuellement avec d'autres épaisseurs).

Selon une autre variante, le déplacement axial de la protection de roue avant 5 est rendu possible par une lame verticale liée au châssis 42. Cette lame est raide dans le plan vertical pour assurer la stabilité verticale du spoiler 3. Ainsi, on découple totalement la partie avant et la partie arrière de la protection, laissant le châssis libre de vriller.

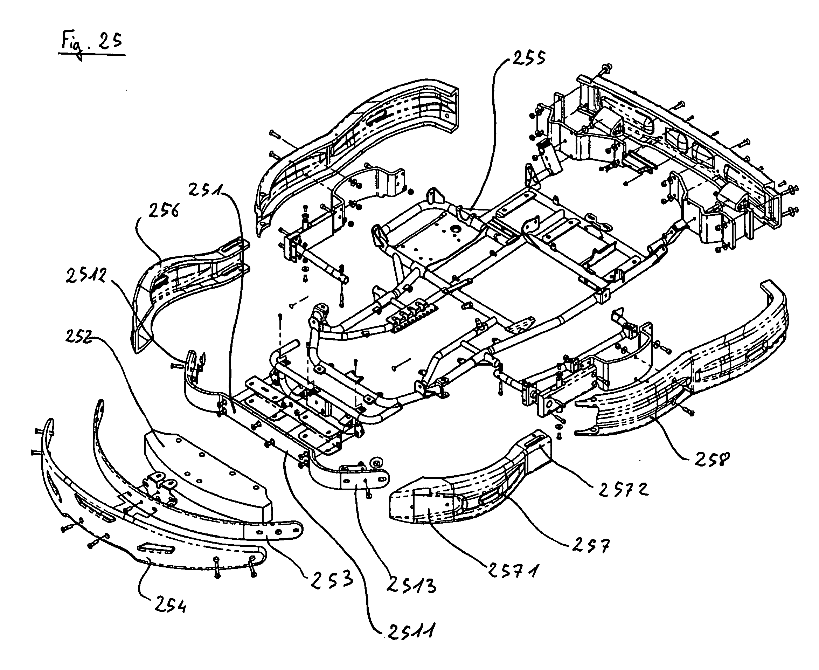

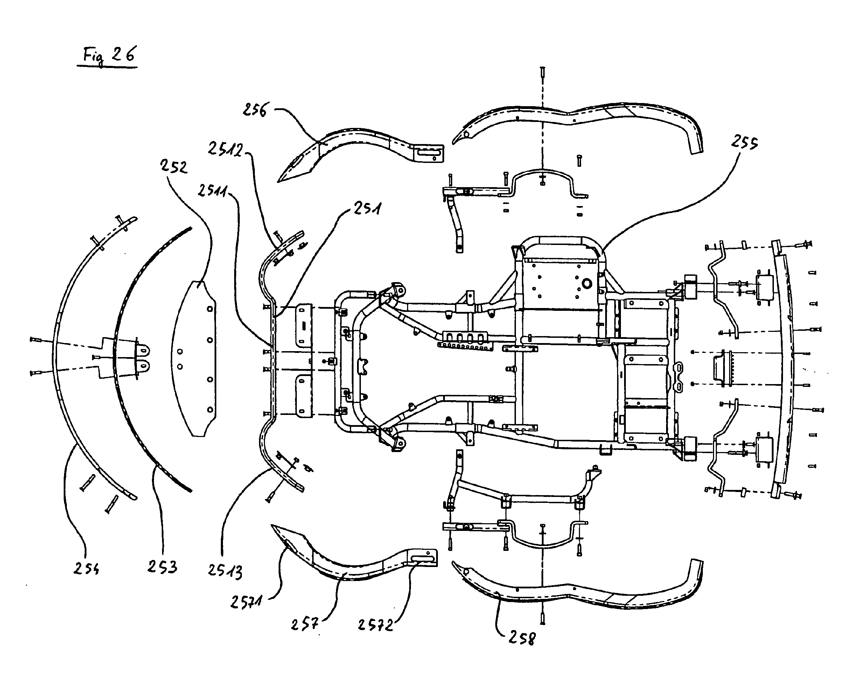

Selon un mode de réalisation de l'invention, illustré par les figures 25, 26 et 27, l'élément de protection avant, ou frontal, du kart est constitué des éléments suivants :

- une lame support 251 ;
- un bloc amortissant 252 ;
- une lame intermédiaire 253 ;
- une lame anti-encastrement 254.

La lame support 251 comporte une portion de fixation 2511 au châssis 255 du kart, qui peut être sensiblement rectiligne. Elle comporte également, de part et d'autre de cette portion de fixation 2511, deux portions déformables 2512 et 2513 de forme arrondies.

La lame intermédiaire 253 est de forme arrondie et est reliée parchacune de ses deux extrémités aux extrémités de la lame support 251, par des vis. Les extrémités de la lame intermédiaire et de la lame support forment une zone d'attache de l'élément de protection avant. Dans l'espace compris entre la lame support 251 et la lame intermédiaire 253 se trouve un bloc amortissant 252, qui peut être par exemple un bloc de mousse.

La lame intermédiaire 253 peut être recouverte d'une lame anti-encastrement 254. Contrairement à la lame support et à la lame intermédiaire, qui sont préférentiellement en matériau métallique, la lame anti-encastrement peut être en matériau plastique. Elle est préférentiellement plus large, de façon à éviter, notamment, que l'avant du kart ne s'encastre sous le châssis d'un autre kart, en cas de collision.

Des éléments de protection de roues avant 256 et 257, qui font partie des protections latérales du kart, sont prévus à droite et à gauche du kart. Chacun de ces éléments de protection est rigide, et est fixé, par son extrémité avant 2571, à la zone d'attache de l'élément de protection avant, de façon que toute rotation selon un axe horizontal entre l'élément de protection de roue avant et les lames de l'élément de protection de roue avant soit empêchée.

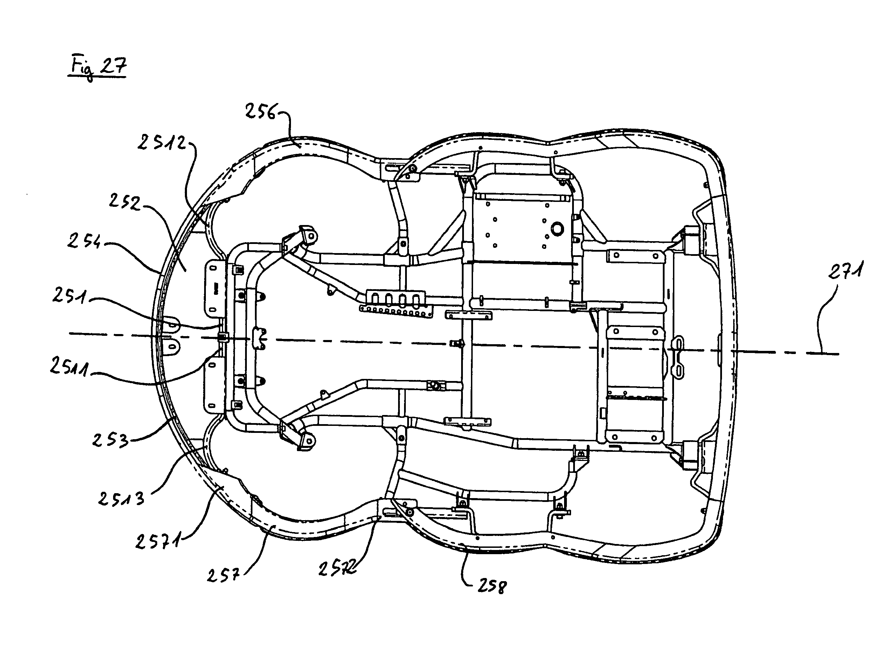

La seconde extrémité 2572 de ces éléments de protection de roue avant est fixée au châssis du kart, à l'arrière de la roue avant, par une liaison coulissante qui permet à la protection avant de coulisser par rapport au châssis selon un axe sensiblement parallèle à l'axe du kart, mais qui ne lui permet pas de rotation importante par rapport au châssis. L'axe du kart, au sens de l'invention, est l'axe 271 représenté sur la figure 27.

Seul un léger jeu dans cette liaison coulissante, de l'ordre de quelques millimètres, permet d'éviter que le châssis soit rigidifié de façon excessive par ses protections, et perde la souplesse nécessaire à la tenue de route du kart.

Alternativement, cette extrémité arrière 2572 de l'élément de protection de la roue avant peut être fixée par une liaison coulissante à un autre élément de protection latérale 258, ou à toute autre pièce qui est elle-même solidarisé au châssis du kart.

En cas de choc sur la partie avant du kart, les lames constituant l'élément de protection avant du kart se déforment. Du fait de leur moment d'inertie et de leur disposition, ces deux lames ne peuvent se déformer de façon significative dans un plan horizontal. En cas de choc frontal important, par exemple, la lame intermédiaire 253 et la lame de fixation 251 se rapprochent, en comprimant le bloc amortissant 252. Le déplacement de la lame intermédiaire peut alors être de plus de 10 centimètres.

Du fait de la disposition des protections, et notamment de la forme des portions déformables de la lame de fixation, les extrémités des lames se déplacent alors vers l'arrière du kart sans rentrer en contact avec les roues avant du kart. Ce déplacement entraîne le déplacement des éléments de protection des roues avant, qui coulissent vers l'arrière. Ces déplacements des éléments de protection se font sur une distance importante, de l'ordre de 10 centimètres pour la partie située le plus en avant, et permettent donc d'amortir le choc subi par le pilote et par le kart de manière efficace.

Pourtant, ces déplacements se font sans aucun dommage pour le kart, et sont réversibles. De plus, ils ne se font sans risque de rotation de la partie avant autour d'un axe horizontal, qui pourrait causer des accidents plus graves, tels que des chevauchements de kart. En effet, les éléments de protection de roue avant 256 et 257 empêchent efficacement une telle rotation. L'élément de protection frontal a donc ainsi une très bonne stabilité verticale.

## Revendications

1. Kart comprenant un châssis (255) et un ensemble de protection, ledit ensemble de protection comprenant plusieurs éléments distincts, parmi lesquels :

   - au moins un élément de protection frontal ;
   - au moins un élément de protection latéral (256,257,258), de chaque côté dudit kart ;

**caractérisé en ce que** ledit élément frontal comprend :

- une lame support (251) comportant une portion de fixation (2511) audit châssis (255) et deux portions déformables (2512,2513) de forme arrondies, de part et d'autre de ladite portion de fixation (2511) ;
- une lame intermédiaire (253) de forme arrondie reliée par chacune de ses deux extrémité aux extrémités de ladite lame support (251) ;
- un bloc amortissant (252) logé dans l'espace entre ladite lame support (251) et ladite lame intermédiaire (253).

**2.** Kart selon la revendication 1, **caractérisé en ce que** ledit élément frontal comprend en outre une lame anti-encastrement (254) recouvrant ladite lame intermédiaire (253).

**3.** Kart selon l'une quelconque des revendications 1 et 2, **caractérisé en ce que** ledit bloc amortissant (252) est un bloc de mousse.

**4.** Kart selon l'une quelconque des revendications 1 à 3, **caractérisé en ce que** les éléments de protection latéraux comprennent au moins un élément de protection des roues avant (256, 257) de chaque côté dudit kart.

**5.** Kart selon la revendication 4, **caractérisé en ce** chacun desdits éléments de protection des roues avant (256, 257) est monté coulissant par rapport à au moins un autre desdits éléments de protection et/ou audit châssis (255), selon un axe sensiblement parallèle à l'axe (271) dudit kart.

**6.** Kart selon l'une quelconque des revendications 4 et 5, **caractérisé en ce que** chacun desdits éléments de protection de roue avant (256, 257) est rigide, et est fixé, par son extrémité avant (2571), à une zone d'attache de l'élément de protection avant.

**7.** Kart selon la revendication 5, **caractérisé en ce que** ladite zone d'attache de l'élément de protection avant est formée par les extrémités de la lame intermédiaire (253) et de la lame support (251).

**8.** Kart selon l'une quelconque des revendications 5 et 6, **caractérisé en ce que** l'extrémité arrière de chacun desdits éléments de protection de roue avant (356, 257) est fixée, par une seconde extrémité (2572), au châssis du kart ou à un autre élément de protection latérale (258) ou à une pièce solidarisée au châssis dudit kart, à l'arrière de la roue avant, par une liaison coulissante, selon un axe sensiblement parallèle à l'axe du haut.

**Claims**

**1.** Go-cart comprising a chassis (255) and a protection assembly, said protection assembly comprising a plurality of distinct elements, including:

- at least one front protection element;
- at least one lateral protection element (256, 257, 258) on each side of said go-cart;

**characterised in that** said front protection element comprises:

- a support strip (251) comprising an attachment portion (2511) to said chassis (255) and two rounded deformable portions (2512, 2513), on both sides of said attachment portion (2511);
- a rounded intermediate strip (253) connected by each of both ends thereof to the ends of said support strip (251);
- a damping block (252) housed in the space between said support strip (251) and said intermediate strip (253).

**2.** Go-cart according to claim 1, **characterised in that** said front element further comprises an underrun protection strip (254) covering said intermediate strip (253).

**3.** Go-cart according to any of claims 1 and 2, **characterised in that** said damping block (252) is a foam block.

**4.** Go-cart according to any of claims 1 to 3, **characterised in that** the lateral protection elements comprise at least one front wheel protection element (256, 257) on each side of said go-cart.

**5.** Go-cart according to claim 4, **characterised in that** each of said front wheel protection elements (256, 257) is fitted such as to slide relative to at least another of said protection elements and/or said chassis (255), along an axis which is substantially parallel to the axis (271) of said go-cart.

6. Go-cart according to any of claims 4 and 5, **characterised in that** each of said front wheel protection elements (256, 257) is rigid, and is attached, via the front end (2571) thereof, to an attachment area of the front protection element.

7. Go-cart according to claim 5, **characterised in that** said attachment area of the front protection element is formed by the ends of the intermediate strip (253) and the support strip (251).

8. Go-cart according to any of claims 5 and 6, **characterised in that** the rear end of each of said front wheel protection elements (356, 257) is attached, via a second end (2572), to the chassis of the go-cart of to another lateral protection element (258) or to a part rigidly connected to the chassis of said go-cart, to the rear of the front wheel, via a sliding connection, along an axis which is substantially parallel to the axis of the go-cart.

**Patentansprüche**

1. Go-Kart, das ein Chassis (255) und eine Schutzausrüstung aufweist, wobei die Schutzausrüstung mehrere verschiedene Elemente umfasst, unter denen sich Folgendes befindet:

   - mindestens ein frontales Schutzelement;
   - mindestens ein seitliches Schutzelement (256, 257, 258) auf jeder Seite des Go-Karts;

   **dadurch gekennzeichnet, dass** das frontale Element Folgendes umfasst:

   - ein Stützplatte (251), umfassend einen Abschnitt zur Befestigung (2511) an das Chassis (255) und zwei verformbare Abschnitte (2512, 2513) mit abgerundeter Form auf beiden Seiten des Abschnitts zur Befestigung (2511);
   - eine Zwischenplatte (253) mit abgerundeter Form, verbunden durch jedes seiner zwei Enden mit den Enden der Stützplatte (251);
   - einen Dämpfungsblock (252), angebracht im Raum zwischen der Stützplatte (251) und der Zwischenplatte (253).

2. Go-Kart nach Anspruch 1, **dadurch gekennzeichnet, dass** das frontale Element außerdem eine Unterfahrschutzplatte (254) umfasst, die die Zwischenplatte (253) abdeckt.

3. Go-Kart nach einem der Ansprüche 1 und 2 **dadurch gekennzeichnet, dass** der Dämpfungsblock (252) ein Schaumblock ist.

4. Go-Kart nach einem der Ansprüche 1 bis 3, **dadurch gekennzeichnet, dass** die seitlichen Schutzelemente mindestens ein Vorderradschutzelement (256, 257) auf jeder Seite des Go-Karts umfassen.

5. Go-Kart nach Anspruch 4, **dadurch gekennzeichnet, dass** jedes der Vorderradschutzelemente (256, 257) gleitend im Verhältnis zu mindestens einem anderen der Schutzelemente und/oder dem Chassis (255) entlang einer Achse, die im Wesentlichen parallel zur Achse (271) des Go-Karts verläuft, montiert ist.

6. Go-Kart nach einem der Ansprüche 4 und 5, **dadurch gekennzeichnet, dass** jedes der Vorderradschutzelemente (256, 257) starr ist und durch sein vorderes Ende (2571) an einen Bereich zur Befestigung des vordern Schutzelements befestigt ist.

7. Go-Kart nach Anspruch 5, **dadurch gekennzeichnet, dass** der Bereich zur Befestigung des vorderen Schutzelements durch die Enden der Zwischenplatte (253) und der Stützplatte (251) gebildet ist.

8. Go-Kart nach einem der Ansprüche 5 und 6, **dadurch gekennzeichnet, dass** das hintere Ende jedes der Vorderradschutzelemente (356, 257) durch ein zweites Ende (2572) an das Chassis des Go-Karts oder an ein anderes seitliches Schutzelement (258) oder an einen Teil, der mit dem Chassis des Go-Karts einstückig ist, am hinteren Teil des Vorderrads durch eine gleitende Verbindung entlang einer Achse befestigt ist, die im Wesentlichen parallel zur Achse des Go-Karts verläuft.

Fig. 1

Fig. 2

Fig. 3

Fig. 4

Fig. 5

Fig. 6

Fig. 7

Fig. 8

Fig. 9

Fig. 10

Fig. 11

Fig. 12

**Fig. 13**

**Fig. 14**

Fig. 15

Fig. 16

Fig. 17

Fig. 18

Fig. 19

Fig. 20

Fig. 21

Fig. 22

rotation

compression

déplacement latéral

choc frontal de biais

Fig. 23

Fig. 24

EP 2 204 303 B1

Fig. 25

26

Fig 26

Fig 27

256
2512
252
254
251
2511
253
2513
2571
257
2572
258
271

EP 2 204 303 B1

**EP 2 204 303 B1**

## RÉFÉRENCES CITÉES DANS LA DESCRIPTION

**Documents brevets cités dans la description**

- US 3666310 A
- US 5139297 A
- DE 2559529
- DE 4432082
- US 5806901 A
- WO 03057538 A
- EP 0159555 A